# EUROPÄISCHE PATENTANMELDUNG

(11) **EP 3 650 139 A1**
(43) Veröffentlichungstag der Anmeldung: **13.05.2020**
(21) Anmeldenummer: 18020585.8
(22) Anmeldetag: 08.11.2018
(51) Int. Cl.: B22F 3/105, B22F 3/11, B22F 5/10, B28B 1/00, C10B 21/12, F23D 14/02, F23D 14/52, F23D 14/58, F23D 14/78, F23D 23/00

(54) **BRENNERMODUL UND VERFAHREN ZUM GENERATIVEN FERTIGEN EINES SOLCHEN BRENNERMODULS**

(71) Anmelder: Linde Aktiengesellschaft, 80331 München (DE)
(72) Erfinder: Eßer, Heinz-Dieter, 52393 Hürtgenwald (DE); Riecker, Matthias, 82140 Olching (DE); Lang, Florian, 85221 Dachau (DE); Neuner, Fabian, 80809 München (DE)
(74) Vertreter: Gellner, Bernd

(57) **Zusammenfassung**

Ein erfindungsgemäßes Brennermodul umfasst zumindest drei oder vier oder fünf oder sechs oder sieben oder acht Funktionswandungen, die zumindest einen ersten Funktionsraum begrenzen und einen Modulkörper ausbilden, wobei der Modulkörper zumindest drei oder vier oder fünf oder sechs oder sechs oder sieben Gasdurchgangsöffnungen aufweist und zumindest zwei dieser Gasdurchgangsöffnungen über den ersten Funktionsraum kommunizierend miteinander verbunden sind, und wobei in einer Oberwandung des Brennermoduls zumindest eine Düseneinrichtung mit einer Brenngasöffnung ausgebildet ist, die über einen Gaskanal kommunizierend mit dem ersten Funktionsraum verbunden ist, wobei das Brennermodul generativ gefertigt ist.

## Beschreibung

Die vorliegende Erfindung betrifft ein Brennermodul und einen mehrere Brennermodule umfassenden modularen Brenner sowie ein Verfahren zum generativen Fertigen eines solchen Brennermoduls und eines solchen modularen Brenners.

Mittels generativer Fertigungsverfahren ist es möglich, verschiedenste dreidimensionale Bauteile mit komplexer Geometrie herzustellen.

Beim 3D-Drucken werden beispielsweise dreidimensionale Werkstücke schichtweise aufgebaut. Der Aufbau erfolgt computergesteuert aus einem oder mehreren flüssigen oder festen Werkstoffen nach vorgegebenen Maßen und Formen (CAD). Beim Aufbau finden physikalische oder chemische Härtungs- oder Schmelzprozesse statt. Typische Werkstoffe für das 3D-Drucken sind Kunststoffe, Kunstharze, Keramiken und Metalle. 3D-Drucker werden in der Industrie und der Forschung eingesetzt. Daneben gibt es auch Anwendungen im Heim- und Unterhaltungsbereich sowie in der Kunst.

Der 3D-Druck ist ein generatives beziehungsweise additives Fertigungsverfahren. Die wichtigsten Techniken des 3D-Druckens sind das selektive Laserschmelzen und das Elektronenstrahlschmelzen für Metalle und das selektive Lasersintern für Polymere, Keramik und Metalle.

Ein weiteres generatives Verfahren ist das punktuelle Aufschmelzen und Erstarren. Bei dieser Art von Verfahren wird Metallpulver oder Metalldraht schichtweise aufgeschmolzen und erstarrt, sodass ein dreidimensionales Bauteil generiert werden kann. Durch die lokal begrenzte Energieeinbringung mittels Laserstrahl ist die Größe des ausgebildeten Schmelzbades gering. Somit besteht die Möglichkeit, filigrane Strukturen zu erzeugen. Entsprechende Verfahren werden als Laser Engineered Net Shaping (LENS), als Direct Metal Deposition (DMD), als Laser Additive Manufacturing (LAM), als Selective Laser Melting (SLM) oder als Laser Metal Deposition (LMD) kommerziell vertrieben.

Beim lokalen Laser-Sintern oder Schmelzen wird zwischen indirekten und direkten Verfahren unterschieden.

Selektives Laser-Sintern (SLS) ist ein Verfahren, um räumliche Strukturen durch Sintern aus einem pulverförmigen Ausgangsstoff herzustellen. Lasersintern ist ein generatives Schichtbauverfahren. Hierbei wird das Werkstück Schicht für Schicht aufgebaut. Durch die Wirkung der Laserstrahlen können so beliebige dreidimensionale Geometrien auch mit Hinterschneidungen erzeugt werden, z.B. Werkstücke, die sich in konventioneller mechanischer oder gießtechnischer Fertigung nicht herstellen lassen.

Beim selektiven Laser-Sintern (SLS/LMF) wird auf einer Arbeitsfläche (Bauplattform) eine Schicht Pulverwerkstoff aufgetragen. Das lose Pulver wird durch einen Laserstrahl punktuell aufgeschmolzen. Dabei werden die Pulverpartikel je nach verwendetem Werkstoff in der Schicht und mit der darunter liegenden Schicht verbunden. Für die Herstellung metallischer Bauteile können zwei grundsätzliche Entwicklungsrichtungen differenziert werden. Neben der direkten Verfestigung metallischer Pulverwerkstoffe durch Laserstrahlung (direktes Metall-Laser-Sintern) hat sich bereits frühzeitig die Herstellung metallischer Bauteile über eine Kombination aus SLS von Kunstsoff ummanteltem Metallpulver mit nachträglicher thermischer Behandlung (IMLS) etabliert.

Beim direkten Metall-Laser-Sintern (DMLS) werden entweder ein- oder mehrkomponentige Metallwerkstoffe verwendet. Insbesondere werden dabei DMLS-Mehrkomponentenpulver verwendet, die aus verschiedenen Legierungselementen bestehen. Die im Pulver enthaltene niedrig schmelzende Komponente wird durch einen Laserstrahl aufgeschmolzen und umfließt die hochschmelzende Komponente, die als Strukturgeber dient.

Beim Electron Beam Melting (EBM) entspricht der Prozessablauf im Wesentlichen dem der Laser-basierten Verfahren. Loses Metallpulver, im Pulverbett oder über eine Düse, oder Draht wird dabei punktuell aufgeschmolzen, und erstarrt anschließend in der gewünschten Kontur. Die dafür erforderliche Energie wird durch einen Elektronenstrahl eingebracht. Das Verfahren erfolgt meistens in einer Inertgas gefluteten UnterdruckKammer.

Demgemäß werden bei generativen Fertigungsverfahren ein Pulverbett, eine Pulverzuführung oder eine Drahtzuführung verwendet, wobei diese Ausgangsmaterialien dann mittels Laserstrahl, Elektronenstrahl, Plasma-/Lichtbogen aufgeschmolzen und anschließend verfestigt werden. Weiterhin werden bei den generativen Fertigungsverfahren Inert- oder Aktivgase als Prozessgase verwendet.

Ein Ziel bei den vorstehend genannten generativen Fertigungsverfahren ist es, eine möglichst effiziente Energieeinbringung zu gewährleisten, so dass ein sicherer Herstellungsprozess und eine hohe Güte des Bauteiles erzielt werden.

In den letzten Jahren wurden Verfahren entwickelt, um die Verarbeitung einkomponentiger Metallwerkstoffe zu verbessern. Entsprechende Verfahren werden beispielsweise unter der Bezeichnung Selective Laser Melting (SLM) kommerziell vertrieben.

Bei diesen Verfahren wird versucht, kritische Einflüsse und Vorgänge bei der Energieeinbringung durch geeignete Maßnahmen zu mindern. In diesem Zusammenhang ist die Verwendung einer Substratplatte, auf der das Bauteil fixiert wird, die Prozessführung unter Schutzgasatmosphäre oder die Anwendung neuer Scan-Strategien zur Belichtung des Pulvers mittels Laserenergie bekannt.

Ein Brenner ist ein Gerät zur Umwandlung von chemischer in thermische Energie. Brenner können für gasförmige (z. B. Propan, Butan oder Erdgas) oder flüssige (z. B. Benzin, Dieselkraftstoff, Heizöl, Kerosin oder Petroleum) Brennstoffe ausgelegt sein. Sogenannte Zweistoffbrenner oder Gebläsebrenner sind in der Lage, sowohl flüssige als auch gasförmige Brennstoffe abwechselnd oder gleichzeitig zu verbrennen. Es ist auch möglich, feste (möglichst feinkörnige) Brennstoffe einzusetzen. Bei flüssigem Brennstoff erfolgt die Zerstäubung entweder durch Druckentspannung oder Hilfsmedien (z. B. Luft oder Dampf).

Weiterhin werden Brenner hinsichtlich der Flammenart unterschieden. Es gibt z.B. die turbulente Diffusionsflamme (z. B. Direkteinspritzermotor, Düsentriebwerk, ältere Ölheizungen) und die turbulente Vormischflamme (z. B. Bunsenbrenner, Ottomotor mit Saugrohreinspritzung, neue Ölheizungen).

Eine weitere Unterscheidungsform ist die Art der Regelung. Es wird zwischen Einstufenbrenner (Ein-/Aus-Regelung), Zwei- oder Mehrstufenbrennern und regelbaren Brennern, die stufenlos betrieben werden, unterschieden.

Die Art des Brennstoffs, die Vermischung der Reaktionspartner und die Notwendigkeit der Flammenstabilisierung führen zu unterschiedlichsten Brennerbauarten, wie z. B. Punkt-, Flächen- oder Drallbrenner.

Im Bereich der Gasbrenner sind Blockbrenner bekannt. Diese umfassen eine Verteilerleiste auf deren Oberseite Brennerdüsen eingeschraubt werden. Die Verteilerleiste ist zumeist ein massiver Block aus Messing welcher durch Tieflochbohrungen in verschiedenen Ebenen entsprechend bearbeitet wird, sodass eine gleichmäßige Gasverteilung über den gesamten Brenner ermöglicht wird. Zusätzliche Medien, wie z.B. Kühlwasser oder Luft können ebenfalls integriert werden, erhöhen jedoch zusätzlich die Komplexitätsgrad der Planung und Fertigung eines solchen Brennerkopfes.

Aufgabe der vorliegenden Erfindung ist es einen variablen und flexiblen Brenner bereitzustellen, der zudem kostengünstig und schnellherstellbar ist.

Eine weitere Aufgabe der vorliegenden Erfindung ist es einen Brenner mit vorbestimmten Eigenschaften und nahezu beliebiger Geometrie effizient herzustellen.

Zudem ist es Aufgabe der vorliegenden Erfindung ein Verfahren zum generativen Fertigen bereitzustellen, mittels dem ein Brenner mit nahezu beliebiger dreidimensionaler Geometrie auf einfache Weise herstellbar ist.

Diese Aufgaben werden durch die unabhängigen Ansprüche gelöst. Vorteilhafte Ausgestaltungen sind in den Unteransprüchen angegeben.

Diese Aufgabe wird dadurch gelöst, dass ein Brennermodul für einen modularen Brenner bereitgestellt wird. Dieses Brennermodul umfasst zumindest drei oder vier oder fünf oder sechs oder sieben oder acht Funktionswandungen, die zumindest einen ersten Funktionsraum begrenzen und einen Modulkörper ausbilden, wobei der Modulkörper zumindest drei oder vier oder fünf oder sechs oder sieben oder acht Gasdurchgangsöffnungen aufweist und zumindest zwei dieser Gasdurchgangsöffnungen über den ersten Funktionsraum kommunizierend miteinander verbunden sind, und
wobei in einer Oberwandung des Brennermoduls zumindest eine Düseneinrichtung mit einer Brenngasöffnung ausgebildet ist, die über einen Gaskanal kommunizierend mit dem ersten Funktionsraum verbunden ist,
wobei das Brennermodul generativ gefertigt ist.

Über den Gaskanal kann ein Brenngas oder ein Brenngasgemisch der Düsenöffnung zuführbar sein.

Herkömmliche Brenner, insbesondere Blockbrenner, werden in der Regel kundenspezifisch hinsichtlich ihrer Eigenschaften, wie z.B. Länge, Breite und Anzahl der Brenner, konstruiert und hergestellt. Somit ist auch häufig ein komplexes Redesign der Gaskanäle notwendig. Zum anderen ist die Fertigung, insbesondere einer Verteilerleiste sehr aufwendig, da aus einem Vollmaterial tiefe Kanäle aus verschiedenen Richtungen gebohrt oder gefräst werden müssen. Dies ist zeitaufwendig und teuer. Des Weiteren müssen die Bohröffnungen anschließend durch einlöten von Stopfen verschlossen werden, was wiederum einen Zusatzaufwand bedeutet.

Erfindungsgemäß wird nun ein Brennermodul zum Ausbilden eines modularen Brenners bereitgestellt. Einzelne Brennermodule können einfach in einem CAD Programm aneinandergereiht werden. Auf diese Weise ist es möglich beliebige Brennerformen und -großen kundespezifisch zu realisieren.

Ein Brennermodul bzw. zumindest eine seiner Funktionswandungen ist dabei mit zumindest einer teilweise komplementär ausgebildeten Funktionswandung eines weiteren Brennermoduls verbindbar. Die Brennermodule sind somit derart ausgestaltet, dass durch das Aneinanderreihen mehrerer Brennermodule Kanäle bzw. Kammern entstehen. Im Baukastenprinzip kann der Designer in kurzer Zeit neue Brennermodule bzw. Brennerköpfe gestalten. Eine Automatisierung dieses Designprozesses via Parametrisierung der Module bzw. des Brennerkopfes ist ebenfalls möglich. Dies verkürzt den Designprozess auf einige Minuten.

Jedes dieser Brennermodule umfasst bereits zumindest einen oder mehrere Kammern bzw. Funktionsräume für ein Brenngasgemisch und/oder eine Wasserkühlung und/oder und Durchgangs- bzw. Anschlussöffnungen. Diese Kammern werden aneinandergereiht und miteinander gasdicht verbunden wodurch ein aufwendiges Design von Verteil- und Kühlkanälen entfällt.

Die Brennermodule sind vorzugsweise derart ausgestaltet, dass
sie ohne zusätzliche, zu entfernende Stützstrukturen problemlos im Powderbedfusionprozess (PBF, Metallpulver 3D Druck) gefertigt werden können. Eine zerspanende Bearbeitung entfällt somit weitestgehend.

Durch die additive Fertigung ist eine Kostenkalkulation binnen weniger Minuten und eine entsprechende Fertigung binnen weniger Tage möglich.

Mit der vorliegenden Erfindung werden insbesondere die folgenden Vorteile erzielt:
- Reduzierung der Produktionskosten, wobei die Kosten für einen modularen Brenner durch das Redesign und durch die additive bzw. generative Fertigung um ca. 50% reduziert werden können.
- Reduzierung des Designaufwands, wobei ein Design eines neuen modularen Brenners in ca. einem halben Manntag statt in ca. 3-4 Manntagen möglich ist, wodurch die Gesamtkosten des Brenners um ca. 75% reduziert werden können.
- Beschleunigte Angebotszeiten, wobei auf Grund des optimierten Designs und der schnellen Kalkulation dieses additiv gestalteten und gefertigten Brennermoduls einem Kunden nun binnen maximal einer Woche ein Projektangebot unterbreitet werden kann , was mit einem konventionellen Brennerdesign deutlich länger dauern würde.
- Einfache Ersatzteillieferung, da im Falle eines Schadens ein exakt gleicher modularer Brenner binnen weniger Tage gefertigt und geliefert werden kann. Dies ist unabhängig von Spezialzulieferern möglich, die für einen herkömmlichen komplexen Verteilerblock benötigt werden.

Ein solches Brennermodul für einen modularen Brenner kann aus entsprechenden Materialien, die zum generativen Fertigen geeignet sind, wie z.B. Messing, Bronze, Inconel, Titan, Wolfram, Kupfer, warmfestem Stahl, verschiedenen Edelstählen und Keramik, hergestellt werden. Dies kann insbesondere im Düsenbereich vorgesehen sein, um eine oder mehrere Düsen temperaturbeständiger auszubilden, wobei für den Modulkörper ein günstigerer Werkstoff verwendet werden kann.

Als Materialkombinationen sind bspw. Paarungen aus Wolfram, Kupfer, Inconel, Edelstahl und/oder Titan möglich.

Weiterhin kann zumindest eine dieser Funktionswandungen zumindest bereichsweise mit einem Bereich einer komplementär ausgebildeten Funktionswandung eines weiteren Brennermoduls verbindbar sein. Unter dem Begriff "komplementär" wird im Rahmen der vorliegenden Erfindung eine Form bzw. eine Ausgestaltung der Funktionswandung verstanden, die ein gasdichtes Verbinden einer oder mehrerer Funktionswandungen oder auch Teilbereichen davon ermöglicht. Vorzugsweise wird ein aus solchen Brennermodulen ausgebildeter modularer Brenner am Stück bzw. im Ganzen generativ gefertigt.

Die Funktionswandungen können mehrere Kanten aufweisen, wie z.B. jeweils zwei Seitenkanten, einer Oberkante und eine Unterkante, die als virtuelle Kanten oder durchgängige Kanten oder als Kantenabschnitte ausgebildet sind. Das bedeutet, dass die Funktionswandungen in einer stirnseitigen Ansicht eine nahezu beliebige Form aufweisen können. Die Kanten können dabei eine rechteckförmige oder vieleckige oder ovale Form aufweisen oder auch kreuzförmig oder dergleichen ausgebildet sein.

Die Düsenöffnung kann selbst eine oder mehrere Brennerdüsen und/oder Öffnungen für Luftduschen und/oder eine oder mehrere Düsen für einen selbstdurchzündenden Brenner ausbilden oder auch als Düsenaufnahmeöffnung zum Aufnehmen einer separat gefertigten Düse ausgebildet sein.

Unter einer Luftdusche wird Im Rahmen der vorliegenden Erfindung eine Zuführung von Luft oder Sauerstoff im Düsenbereich im Bereich einer brenngasdüse verstanden, um insbesondere bei einem Array aus Brennermodulen zentral angeformte Brenngasdüsen mit Sauerstoff für den Brennvorgang zu versorgen.

Unter einer Düse für einen selbstdurchzündenden Brenner wird Im Rahmen der vorliegenden Erfindung eine Düse im Düsenbereich verstanden, die Richtung einer Brenngasdüse eines benachbarten Brennermoduls gerichtet ist, um ein kaskadiertes Durchzünden der Brennermodule zu ermöglichen.

Das Brennermodul kann in einer Draufsicht von oben drei-, vier-, fünf-, sechs-, sieben, acht oder mehr- bzw. viel eckig oder rund ausgebildet sein oder eine andere geeignet Form aufweisen, die es ermöglich mehrere Brennermodule nebeneinander und insbesondere in einem Array anzuordnen oder diese miteinander zu verbinden. Entsprechende geeignete Geometrien und Formen sind auch aus dem Verlege-Mustern im Bereich von Fliesen bekannt.

Der Modulkörper kann zumindest drei oder vier oder fünf oder sechs Funktionsdurchgangsöffnung aufweisen, wobei zumindest zwei dieser Funktionsdurchgangsöffnungen über einen zweiten Funktionsraum kommunizierend miteinander verbunden sind, und wobei der zweite Funktionsraum räumlich vom ersten Funktionsraum getrennt ist, so dass der zweite Funktionsraum bspw. eine Kühlkammer ausbildet, wobei der Kühlkammer bzw. dem zweiten Funktionsraum über die Funktionsdurchgangsöffnungen ein geeignetes Kühlmedium, wie zum Beispiel Wasser zuführbar ist.

Der zweite Funktionsraum kann zusätzlich und/oder alternativ über einen Funktionskanal kommunizierend mit einer oder mehreren in der Oberwandung ausgebildeten Funktionsöffnung verbunden sein, um eine Luftdusche auszubilden..

Über den Funktionskanal kann dem Brenngasgemisch somit bspw. zusätzlich Luft oder Sauerstoff zugeführt werden oder die Düse mit einem entsprechenden Kühlmedium beaufschlagt werden.

Der Modulkörper kann zumindest drei oder vier oder fünf oder sechs weitere Durchgangsöffnung aufweisen, wobei zumindest zwei dieser Durchgangsöffnungen über den ersten oder den zweiten Funktionsraum miteinander verbunden sind, um im ersten oder im zweiten Funktionsraum eine Mischkammer auszubilden oder wobei zumindest zwei dieser Durchgangsöffnungen über einen weiteren Funktionsraum kommunizierend miteinander verbunden sind, wobei der weitere Funktionsraum räumlich vom ersten und vom zweiten Funktionsraum getrennt ist und optional über einen Kanal kommunizierend mit einer weiteren Öffnung der in der Oberwandung ausgebildeten Düseneinrichtung verbunden ist.

Demgemäß können zumindest zwei unterschiedliche in einer Funktionswandung ausgebildete Durchgangsöffnungen in denselben Funktionsraum münden, um eine Mischkammer auszubilden. In dieser Mischkammer kann ein Brenngas mit Luft vermischt werden, um ein Brenngasgemisch auszubilden.

Somit kann das Brennermodul im Düsenbereich eine oder mehrere selbstdurchzündende Hilfsbrennerdüsen und/oder Luftduschen und/oder einen oder mehrere weitere Funktionsräum aufweisen, die vorzugsweise übereinander in mehreren Ebenen angeordnet sind, um eine Mischkammer oder eine Kühlkammer auszubilden.

Es ist möglich, dass das Brennermodul in etwa zylindrisch ist oder einen gebogenen Brennerkopf ausbildet.

Auch ist die Form der Düsenöffnung variabel, so kann beispielsweise statt dedizierten Löchern eine poröse Fläche gedruckt werden, welche ähnlich eines Sintersteines eine homogene Flammendecke erzeugt. Diese poröse Fläche kann durch integrierte Kühlkanäle gekühlt werden, um diese nicht zu beschädigen.

Erfindungsgemäß können in einem Brennermodul bzw. in einem modularen Brenner zwei, drei oder vier oder fünf Funktionsräum ,it entsprechenden Durchgangsöffnungen in verschiedenen in vertikaler Richtung übereinander angeordneten Ebenen vorgesehen sein.

Somit ist erfindungsgemäß ein modularer Brenner vorgesehen, umfassend zumindest zwei und vorzugsweise mehrere der vorstehend beschriebenen Brennermodule, die im Bereich ihrer Funktionswandungen zu einem Brennermodularray miteinander verbunden sind, wobei das gesamte Brennermodularray am Stück generativ gefertigt ist, und wobei randseitig angeordnete Brennermodule entsprechend eine oder mehrere geschlossene Seitenwandungen aufweisen.

Weiterhin kann eine Zuführeinrichtung zum Zuführen von einem oder mehreren Medien, wie z.B. ein Brenngasgemisch, Brenngas, ein Kühlmedium, Luft und/oder Sauerstoff vorgesehen sein.

Die vorstehend an Hand des Brennermoduls aufgezeigten Vorteile gelten anlog für den aus mehreren Brennermodulen ausgebildeten erfindungsgemäßen modularen Brenner.

Ein Verfahren zum generativen Fertigen eines dreidimensionalen Brennermoduls oder eines modularen Brenners umfassend die folgenden Schritte:
Bereitstellen eines Ausgangsmaterials,
Schmelzen des Ausgangsmaterials mit einer Wärmequelle zum Ausbilden einer Bauteilschicht,
Wiederholen der vorstehenden Schritte.

Das erfindungsgemäße Verfahren zeichnet sich dadurch aus, dass ein vorstehend beschriebenes Brennermodul oder eine vorstehend beschriebener modularer Brenner durch die mehreren Bauteilschichten ausgebildet wird.

Weiterhin kann vorgesehen sein, dass in einem und/oder in mehreren Schritten unterschiedliche Ausgangsmaterialien in verschiedenen Schichten und/oder in verschiedenen Bereichen des Brennermoduls verwendet werden.

Während des Verfahrens kann ein Prozess- und/oder ein Funktionsgas zugeführt werden, um die Bauteileigenschaften zu verbessern.

Weiterhin kann während des generativen Fertigens ein Temperieren, d.h. ein Kühlen und/oder ein Erwärmen des Ausgangsmaterials und/oder des Prozessgases erfolgt und/oder, dass ein Stabilisierungsschritt vorgesehen ist, in dem eine Schicht gekühlt und verfestigt wird.

Im Düsenbereich können im Brennermodul Poren ausgebildet sind, um eine Düsenfläche auszubilden oder damit dieser Bereich membranartige Eigenschaften aufweist zum Abgeben von Gasen aufweist.

Dadurch, dass erfindungsgemäß vorgesehen ist, das Brennermodul mittels eines generativen Fertigungsverfahrens herzustellen, ist es möglich, beliebig komplexe Geometrien vorzusehen.

Unter einem generativen Fertigen wird im Rahmen der vorliegenden Erfindung das Lagen bzw. schichtweise Aufbauen eines dreidimensionalen Bauteils unter Verwendung eines Pulverbettes, einer Pulverzuführung oder einer Drahtzuführung, welche als Ausgangsmaterial dienen, und mittels Laserstrahl, Elektronenstrahl oder Plasma bzw. Lichtbogen aufgeschmolzen werden, verstanden. Diesbezüglich wird auf die in der Beschreibungseinleitung genannten generativen Fertigungsverfahren (3D-Drucken bzw. bei der Verfestigung durch chemische Aktivatoren, Aufschmelzen und Erstarren (Laser Engineered Net Shaping (LENS), als Direct Metal Deposition (DMD) oder als Laser Additive Manufacturing (LAM)), lokalen Sintern oder Schmelzen, (Laser-Sintern (SLS)) Metall-Laser-Sintern (DMLS), Metall-Laser-Sintern (IMLS), Electron Beam Melting (EBM)) Bezug genommen.

Bei generativen Fertigungsverfahren werden zumeist Wärme- oder Energiequellen verwendet, die an einem bestimmten Punkt einer Schicht bzw. Lage eines herzustellenden Bauteils Energie einbringen. Diese während des Herstellungsprozesses eingebrachte Energie verbleibt in dem aufzubauenden Bauteil und erhöht dessen Temperatur. Wie vorstehend erläutert, ist diese überschüssige Wärme im Bauteil zumeist nachteilig und hat negative Einflüsse auf die Materialeigenschaften. Zudem hat die überschüssige Wärme, die nicht aus dem Bauteil abgeführt wird, einen negativen Einfluss auf den Herstellungsprozess selbst. Dies führt zu Prozessinstabilitäten und einer verminderten Reproduzierbarkeit.

Der Schritt, bei dem die Poren in zumindest einer Bauteilschicht ausgebildet werden, kann durch generatives Fertigen derart ausgeführt werden, dass das Ausgangsmaterial nur teilweise vollständig aufgeschmolzen wird und in einem Bereich des nicht vollständig aufgeschmolzenen Ausgangsmaterials die entsprechenden Poren ausgebildet werden.

Zusätzlich und/oder alternativ kann das Ausbilden der Poren beim generativen Fertigen auch derart ausgeführt werden, dass beim generativen Fertigen Fehlstellen im Material vorgesehen werden, um die Poren auszubilden.

Weiterhin können die Poren zusätzlich und/oder alternativ in zumindest einer Bauteilschicht ausgebildet werden, indem eine zusätzliche chemische Behandlung einer Schicht als Zwischenschritt während des Fertigens und/oder nach Abschluss der generativen Fertigungsschritte als Nachbehandlung derart ausgeführt wird, dass das Material aufgelöst und/oder ausgespült wird, um die Poren auszubilden.

Es kann auch vorgesehen sein die Poren im Bauteil als Konstruktionselemente vorzusehen. Das bedeutet die Poren werden im CAD-Modell erstellt und dann beim generativen Fertigen entsprechend ausgebildet. Die Größe der Poren ist dann nahezu beliebig einstellbar, wobei lediglich die minimale Schichtdicke, welche durch das generative Fertigungsverfahren herstellbar ist, eine Begrenzung darstellt.

Die Entstehung der Poren kann durch die Einstellung der Prozessparameter, wie z.B. die Wahl des bzw. der Ausgangsmaterialien und/oder der Temperatur in einer Prozesskammer und/oder der Temperatur der Wärmequelle zum Aufschmelzen des Ausgangsmaterial und/oder die Wahl eines entsprechenden Prozessgases beeinflussbar sein.

Das Prozessgas kann ein inertes Gas, wie z.B. Argon, Helium, Neon, Krypton, Xe-non oder Radon oder ein Aktivgas wie Wasserstoff (H2), Kohlenmonoxid (CO), Silan, Sauerstoff (O2), Kohlendioxid (CO2), Stickstoff (N2) oder auch Mischungen daraus mit oder ohne reduzierende oder oxidierende Komponenten, umfassen. Demgemäß wird auch ein Schutzgas, wie z.B. ein bei einem Laser- oder Lichtbogen-Verfahren im Bereich der Düse zugeführtes Schutzgas als Prozessgas im Sinne der vorliegenden Erfindung verstanden.

Im Folgenden wird die vorliegende Erfindung an Hand eines in den Figuren dargestellten Ausführungsbeispiels näher beschrieben. Diese zeigen in
Figur 1 ein erfindungsgemäßes Brennermodul für einen modularen Brenner in einer perspektivischen Darstellung, und
Figur 2 das Brennermodul aus Figur 1 in einer weiteren perspektivischen Darstellung, und in
Figur 3 einen erfindungsgemäßen modulare Brenner, der mehrere Brennermodule umfasst, in einer perspektivischen Darstellung.

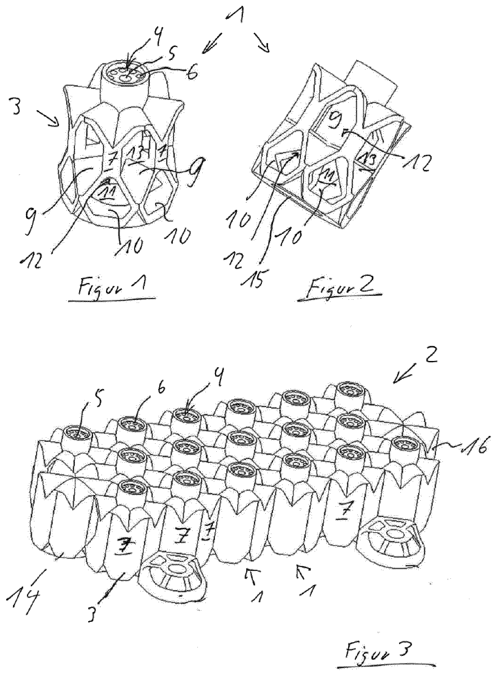

Im Folgenden wird ein Ausführungsbeispiel eines erfindungsgemäßen Brennermoduls 1 für einen erfindungsgemäßen modularen Brenner 2 beschrieben (Figuren 1 und 2).

Das Brennermodul 1 umfasst einen Modulkörper 3 und eine Düseneinrichtung 4. Die Düseneinrichtung 4 weist im vorliegenden Ausführungsbeispiel eine zentral angeordnete Brenngasöffnung 5 und neun diese konzentrisch umgebende Stützbrenneröffnungen 6 auf.

Der Modulkörper 3 weist sechs Seitenwandungen auf, die als Funktionswandungen 7 bezeichnet werden.

Das Brennermodul 1 ist gemäß diesem Ausführungsbeispiel in einer Draufsicht von oben sechs-eckig ausgebildet

Jede der Funktionswandungen 7 begrenzt zwei Bereiche 8 von zwei verschiedenen Funktionsdurchgangsöffnungen 9 und eine Gasdurchgangsöffnung 10.

Demgemäß bilden zwei benachbarte Funktionswandungen 7 eines Brennermoduls 1 zusammen mit zwei mit diesem verbundenen weiteren Funktionswandungen 7 von zwei weiteren Brennermodulen 1 die Funktionsdurchgangsöffnung 9 aus.

Im Rahmen der vorliegenden Erfindung kann eine Funktionswandung auch nur Bereiche einer Gasdurchgangsöffnung 10 oder eine ganze Funktionsdurchgangsöffnung 9 begrenzen.

Die Gasdurchgangsöffnungen 10 münden in einen im Modulkörper 3 ausgebildeten ersten Funktionsraum 11, über den die Gasdurchgangsöffnungen 10 kommunizierend miteinander verbunden sind.

Der erste Funktionsraum 11 ist über einen sich in vertikaler Richtung erstreckenden Gaskanal 12 mit der Brenngasöffnung 5 verbunden.

Über die Gasdurchgangsöffnungen 10 und den Gaskanal 12 ist die Brenngasöffnung bzw. -düse 5 mit einem Brenngas beaufschlagbar.

Die Funktionsdurchgangsöffnungen 9 münden in einen im Modulkörper 3 ausgebildeten zweiten Funktionsraum 13, über den die Funktionsdurchgangsöffnungen 9 kommunizierend miteinander verbunden sind.

Der zweite Funktionsraum 13 bildet eine Kühlkammer aus und ist über die Funktionsdurchgangsöffnungen 9 mit einem Kühlmedium, z.B. Wasser beaufschlagbar, um den Modulkörper 3 und insbesondere den Düsenbereich 4 zu kühlen.

Alternativ kann der zweite Funktionsraum 13 ist über einen zweiten, konzentrisch zum Gaskanal 12 angeordneten und sich in vertikaler Richtung erstreckenden Funktionskanal 14 mit Öffnungen im Düsenbereich verbunden sein (nicht dargestellt).

Über die Funktionsdurchgangsöffnungen 9 und den Funktionskanal 14 können die LuftÖffnungen mit Luft beaufschlagbar sein, um eine Luftdusche auszubilden.

Die Funktionswandungen 7 weisen jeweils zwei Seitenkanten, einer Oberkante und eine Unterkante auf, die als virtuelle Kanten oder durchgängige Kanten oder als Kantenabschnitte ausgebildet sind.

Das erfindungsgemäße Brennermodul 1 kann in einer Draufsicht von oben auch drei-, vier-, fünf- oder mehreckig ausgebildet sein und eine entsprechende Anzahl von Funktionswandungen aufweisen.

Der erfindungsgemäße modulare Brenner 2 umfasst im vorliegenden Ausführungsbeispiel siebzehn Brennermodule 1, die über ihre Funktionswandungen miteinander verbunden sind und ein Brennermodularray ausbilden (Figur 3).

Die randseitigen Funktionswandungen sind entsprechend geschlossen ausgebildet.

Weiterhin ist sind eine oder mehrere Zuführeinrichtungen zum Zuführen von einem oder mehreren Medien, wie z.B. Wasser, Luft, Sauerstoff, Brenngas und/oder Brenngasgemisch vorgesehen.

Gemäß diesem Ausführungsbeispiel wird den Gasdurchgangsöffnungen 10 eine Brenngasgemisch über eine Zuführöffnung 15, die in einer Bodenwandung eines Brennermodul 1 des modularen Brenners 3 ausgebildet ist, zugeführt.

Ein Kühlmedium wir über eine Kühlmediumzufüreinrichtung 14 den Funktionsdurchgangsöffnungen 9 zugeführt und mittels einer Kühlmediumabführeinrichtung 16 aus diesen abgeführt.

Im Folgenden wird das erfindungsgemäße Verfahren zum generativen Fertigen eines Brennermoduls bzw. eines modularen Brenners beispielhaft beschrieben. Grundsätzlich ist, wie bereits vorstehend erläutert, nahezu jedes generative Fertigungsverfahren zum Ausbilden des dreidimensionalen Brennermoduls geeignet.

Das Verfahren wird im Folgenden jedoch beispielhaft anhand des Laser-Schmelzverfahrens mit Pulverbett erläutert.

In einem ersten Schritt wird ein metallisches Ausgangsmaterial auf einer Bauplattform in Form eines Pulverbettes mittels einer Beschichtungseinrichtung aufgebracht.

Wie vorstehend erläutert, kann anstelle eines metallischen Ausgangsmaterials auch ein Ausgangsmaterial aus Keramik vorgesehen sein. Im Falle eines metallischen Ausgangsmaterials kann dieses auch mittels einer Pulverzuführung oder einer Drahtzuführung oder in Form von Filamenten bereitgestellt werden.

In einem nächsten Schritt wird der Prozesskammer ein Prozessgas zugeführt. Im vorliegenden Fall ist beispielsweise ein inertes Schutzgas, wie zum Beispiel Stickstoff, vorgesehen.

Im darauffolgenden Schritt wird das Ausgangsmaterial mittels einer Wärmequelle, wie zum Beispiel einem Laser, aufgeschmolzen.

In der Regel erfolgt die Abkühlung einer Schicht während der Laser Material an anderer Stelle aufschmilzt oder auch wenn eine neue Pulverschicht aufgetragen wird.

Zusätzlich und/oder alternativ kann gemäß dem vorstehend beschriebenen Verfahren auch vorgesehen sein, dass eine Schicht aus Metallpartikeln unterschiedlicher Eigenschaften bereitgestellt wird. Das bedeutet, dass im vorliegenden Fall das Metallpulver, gleiches gilt aber auch für einen Draht oder für Filamente, bzw. dessen Partikel an der Oberfläche eine andere Materialzusammensetzung aufweisen, als im Inneren. Derartige Eigenschaften können beispielsweise mittels einer entsprechenden Beschichtung oder einer relativ einfachen Modifikation, bspw. mittels einer entsprechend auf die Partikel aufgebrachten Oxid- oder Nitridschicht sein.

Diese Schritte werden dann wiederholt, um ein Brennermodul oder einen modularen Brenner in beliebig komplexer Geometrie bereitzustellen.

Erfindungsgemäß können in einem Brennermodul bzw. in einem modularen Brenner zwei, drei oder vier oder fünf Funktionsräum ,it entsprechenden Durchgangsöffnungen in verschiedenen in vertikaler Richtung übereinander angeordneten Ebenen vorgesehen sein.

### Bezugszeichenliste

- 1: Brennermodul
- 2: modularer Brenner
- 3: Modulkörper
- 4: Düseneinrichtung
- 5: Brenngasöffnung
- 6: Stützbrenner Öffnung
- 7: Funktionswandung
- 8: Bereich
- 9: Funktionsdurchgangsöffnung
- 10: Gasdurchgangsöffnung
- 11: erster Funktionsraum
- 12: Gaskanal
- 13: zweiter Funktionsraum
- 14: Kühlmediumzufüreinrichtung
- 15: Zuführöffnung
- 16: Kühlmediumabführeinrichtung

## Patentansprüche

1. Brennermodul für einen modularen Brenner umfassend zumindest drei oder vier oder fünf oder sechs oder sieben oder acht oder mehr Funktionswandungen, die zumindest einen ersten Funktionsraum begrenzen und einen Modulkörper ausbilden, wobei der Modulkörper zumindest drei oder vier oder fünf oder sechs Gasdurchgangsöffnungen aufweist und zumindest zwei dieser Gasdurchgangsöffnungen über den ersten Funktionsraum kommunizierend miteinander verbunden sind, und wobei in einer Oberwandung des Brennermoduls zumindest eine Düseneinrichtung mit einer Brenngasöffnung ausgebildet ist, die über einen Gaskanal kommunizierend mit dem ersten Funktionsraum verbunden ist, wobei das Brennermodul generativ gefertigt ist.

2. Brennermodul gemäß Anspruch 1, **dadurch gekennzeichnet, dass** der Modulkörper zumindest drei oder vier oder fünf oder sechs Funktionsdurchgangsöffnung aufweist und zumindest zwei dieser Funktionsdurchgangsöffnungen über einen zweiten Funktionsraum kommunizierend miteinander verbunden sind, wobei der zweite Funktionsraum räumlich vom ersten Funktionsraum getrennt ist.

3. Brennermodul gemäß Anspruch 2, **dadurch gekennzeichnet, dass** der zweite Funktionsraum über einen Funktionskanal kommunizierend mit einer weiteren Öffnung der in der Oberwandung ausgebildeten Düseneinrichtung verbunden ist, um eine Luftdusche auszubilden.

4. Brennermodul gemäß einem der Ansprüche 1 bis 3, **dadurch gekennzeichnet, dass** der Modulkörper zumindest drei oder vier oder fünf oder sechs weitere Durchgangsöffnung aufweist, wobei zumindest zwei dieser Durchgangsöffnungen über den ersten oder den zweiten Funktionsraum miteinander verbunden sind, um im ersten oder im zweiten Funktionsraum eine Mischkammer auszubilden oder wobei zumindest zwei dieser Durchgangsöffnungen über einen weiteren Funktionsraum kommunizierend miteinander verbunden sind, wobei der weitere Funktionsraum räumlich vom ersten und vom zweiten Funktionsraum getrennt ist und optional über einen Kanal kommunizierend mit einer weiteren Öffnung der in der Oberwandung ausgebildeten Düseneinrichtung verbunden ist.

5. Brennermodul gemäß einem der Ansprüche 1 bis 4, **dadurch gekennzeichnet, dass** die Gasdurchgangsöffnungen und/oder die Funktionsdurchgangsöffnungen vollständig oder bereichsweise in den Funktionswandungen ausgebildet sind, wobei wenn die Gasdurchgangsöffnungen und/oder die Funktionsdurchgangsöffnungen bereichsweise in den Funktionswandungen ausgebildet sind, sodass diese dann durch zwei benachbarte Funktionswandungen ausgebildet sind.

6. Brennermodul gemäß einem der Ansprüche 1 bis 5, **dadurch gekennzeichnet, dass** das Brennermodul in einer Draufsicht von oben drei-, vier-, fünf-, sechs-, sieben-, acht- oder mehreckig oder in etwa rund ausgebildet ist.

7. Modulare Brenner umfassend zumindest zwei und vorzugsweise mehrere Brennermodule gemäß den Patenansprüchen 1 bis 7, die im Bereich ihrer Funktionswandungen zu einem Brennermodularray miteinander verbunden, wobei das gesamte Brennermodularray am Stück generativ gefertigt ist, wobei randseitig angeordnete Brennermodule entsprechend eine oder mehrere geschlossene Seitenwandungen aufweisen.

8. Modularer Brenner gemäß Anspruch 7, **dadurch gekennzeichnet,**
**dass** zumindest eine Zuführeinrichtung zum Zuführen von einem oder mehreren Medien vorgesehen ist.

9. Verfahren zum generativen Fertigen eines dreidimensionalen Brennermoduls oder eines modularen Brenners umfassend die folgenden Schritte Bereitstellen eines Ausgangsmaterials, Schmelzen des Ausgangsmaterials mit einer Wärmequelle zum Ausbilden einer Bauteilschicht, Wiederholen der vorstehenden Schritte, **dadurch gekennzeichnet, dass** ein Brennermodul gemäß einem der Ansprüche 1 bis 6 durch die mehreren Bauteilschichten ausgebildet wird.

10. Verfahren gemäß Anspruch 6, **dadurch gekennzeichnet, dass** in einem und/oder in mehreren Schritten unterschiedliche Ausgangsmaterialien in verschiedenen Schichten und/oder in verschiedenen Bereichen, insbesondere im Düsenbereich des Brennermoduls verwendet werden.
